# EUROPÄISCHE PATENTSCHRIFT

(11) **EP 1 770 313 B1**
(45) Veröffentlichungstag und Bekanntmachung des Hinweises auf die Patenterteilung: **16.05.2012**
(21) Anmeldenummer: 06019244.0
(22) Anmeldetag: 14.09.2006
(51) Int. Cl.: F16H 61/12, F16H 61/32

(54) **Verfahren und Vorrichtung zum Betreiben einer Antriebseinrichtung**
Method and device for operating a drive mechanism
Procédé et dispositf destinés à l'utilisation d'un dispositif d'entraînement

(30) Priorität: 01.10.2005 DE 102005047287
(43) Veröffentlichungstag der Anmeldung: 04.04.2007
(73) Patentinhaber: Schaeffler Technologies AG & Co. KG, 91074 Herzogenaurach (DE)
(72) Erfinder: Schweizer, Alexander, 77815 Bühl (DE); Zimmermann, Martin, 77880 Sasbach (DE); Martin, Jens, 76547 Sinzheim-Kartung (DE); Hirt, Joachim, 77704 Oberkirch (DE); Fuss, Martin, Wooster Ohio 44691 (US); Ehrlich, Matthias, 77815 Bühl (DE); Stengel, Frank, 76534 Baden-Baden (DE)

(56) Entgegenhaltungen:
- DE-A- 10 316 447
- DE-A1- 10 316 421

## Beschreibung

Die Erfindung betrifft ein Verfahren und eine Vorrichtung zum Betreiben einer Antriebseinrichtung, insbesondere zum Verstellen eines automatisierten Getriebes und/oder einer Kupplung in einem Kraftfahrzeug, wobei die Antriebseinrichtung einen Antriebsmotor aufweist, der mit einem zu positionierenden beweglichen Element in Antriebsverbindung steht.

Dokument DE 103 16 421 A1 offenbart ein Verfahren zum Abgleich einer inkrementellen Wegsensorik einer Antriebseinrichtung zum Verstellen eines Getriebes durch Anfahren von bestimmten Referenzpunkten.

Ein derartiges Verfahren zum Betreiben einer Antriebseinrichtung, die zum Schalten eines automatisierten Getriebes vorgesehen ist, ist aus DE 103 16 442 A1 bekannt. Die Antriebseinrichtung weist einen bürstenlosen Elektromotor auf, der ein bewegliches Element des Getriebes verstellt. Zum Positionieren des beweglichen Elements wird die Wicklung des Elektromotors mit Hilfe einer Steuerelektronik angesteuert. Die Drehzahl des beweglichen Elements wird gemessen, indem mit Hilfe von Hall-Sensoren ein inkrementales Drehzahlmesssignal erfasst wird. Das Drehzahlmesssignal wird auch zur absoluten Bestimmung der Lage des beweglichen Elements verwendet. Mit Hilfe des Antriebsmotors wird das bewegliche Element zunächst in eine vorbestimmte, bekannte Referenzlage gebracht. Dann wird ein absolutes Positionssignal auf einen der Referenzlage zugeordneten Referenzwert gesetzt. Danach wird das bewegliche Element zum Wählen eines von einer Getriebesteuerung angeforderten Gangs aus der Referenzlage wegbewegt. Das inkrementale Drehzahlmesssignal wird dabei überwacht, um das absolute Positionssignal bei jeder Änderung des inkrementalen Lagemesssignals nachzuführen. Während des Positionierens des beweglichen Elements wird das Drehzahlmesssignal mit hinterlegten Drehzahl-Signalen verglichen. Falls dabei eine Abweichung festgestellt wird, wird eine Neutralreferenzfahrt eingeleitet. Dadurch werden Fehler beim Verstellen des Getriebes, die zu einem kritischen Fahrzustand, einer Beschädigung des Getriebes und/oder einer Gefährdung führen können auch dann weitgehend vermieden, wenn bei dem Drehzahlmesssignal aufgrund einer Störung zuviel oder zuwenig Inkremente gemessen werden. Dennoch kann durch diese Plausibilisierung ein falsches Positionieren des beweglichen Elements nicht in allen Fällen aufgedeckt und vermieden werden, insbesondere wenn nur wenige Inkremente verloren gehen oder zuviel gezählt wurden und der Fehler im Bereich der mechanischen Toleranzen und der statistischen Schwankungen der Messwerte liegt.

Es besteht deshalb die Aufgabe, ein Verfahren der eingangs genannten Art zu schaffen, mit dem eine Fehlpositionierung des beweglichen Elements mit großer Sicherheit auch beim Auftreten kleiner Fehler des Lagemesssignals detektiert werden kann.

Diese Aufgabe wird dadurch gelöst,
a) dass das bewegliche Element mit Hilfe des Antriebsmotors in eine vorbestimmte Referenzlage gebracht und ein absolutes Positionssignal auf einen der Referenzlage zugeordneten Referenzwert gesetzt wird,
b) dass die Lage des beweglichen Elements mit Hilfe des Antriebsmotors verändert und ein von der Lageänderung abhängiges inkrementales Lagemesssignal für das bewegliche Element erzeugt wird,
c) dass das inkrementale Lagemesssignal überwacht und das absolute Positionssignal beim Auftreten einer Änderung des inkrementalen Lagemesssignals nachgeführt wird,
d) dass das bewegliche Element mit Hilfe des Antriebsmotors erneut in der Referenzlage positioniert und der Positionswert, den das absolute Positionssignal in der Referenzlage aufweist, ermittelt wird,
e) dass aus dem Positionswert und dem Referenzwert ein Differenzwert ermittelt und in einem Datenspeicher abgelegt wird,
f) dass die Schritte b) bis e) mindestens einmal erneut durchlaufen werden,
g) dass mindestens zwei der so erhaltenen Differenzwerte zu einem Kontrollwert aufaddiert werden,
h) und dass der Kontrollwert mit einem vorgegebenen Sollwertbereich verglichen und beim Auftreten einer Abweichung zwischen dem Kontrollwert und dem Sollwertbereich ein Fehlerzustand erkannt wird.

In vorteilhafter Weise werden also die in den einzelnen, zwischen zwei aufeinander folgenden Referenzfahrten befindlichen Zyklen ermittelten, in der Praxis in der Regel immer vorhandenen Abweichungen zwischen dem Positionswert, den das absolute Positionssignal in der Referenzlage hat, und dem Referenzwert über mehrere Zyklen zu einem Kontrollwert aufaddiert. Dabei mitteln sich Fehler, die durch Rauschen verursacht sind oder bei den einzelnen Zyklen mal ein positives und mal ein negatives Vorzeichen haben, weitgehend heraus. Fehler, die dagegen immer in dieselbe Richtung weisen, führen zu einer betragsmäßigen Zunahme des Kontrollwerts. Somit können auch kleine Fehler das Erkennen eines Fehlerzustands auslösen, wenn diese wiederholt auftreten. Der Kontrollwert und/oder die Differenzwerte werden vorzugsweise in einem nicht flüchtigen Datenspeicher abgelegt, so dass sie in einem Kraftfahrzeug auch nach dem Abschalten der Zündung weiterhin gespeichert sind.

Die vorstehend genannte Aufgabe kann auch dadurch gelöst werden,
a) dass das bewegliche Element mit Hilfe des Antriebsmotors in eine vorbestimmte Referenzlage gebracht und ein absolutes Positionssignal auf einen der Referenzlage zugeordneten Referenzwert gesetzt wird,
b) dass die Lage des beweglichen Elements mit Hilfe des Antriebsmotors verändert und ein von der Lageänderung abhängiges inkrementales Lagemesssignal für das bewegliche Element erzeugt wird,
c) dass das inkrementale Lagemesssignal überwacht und das absolute Positionssignal beim Auftreten einer Änderung des inkrementalen Lagemesssignals nachgeführt wird,
d) dass das bewegliche Element mit Hilfe des Antriebsmotors erneut in der Referenzlage positioniert und der Positionswert, den das absolute Positionssignal in der Referenzlage aufweist, ermittelt und in einem Datenspeicher abgelegt wird,
e) dass die Schritte b) bis d) mindestens einmal erneut durchlaufen werden,
f) dass die so erhaltenen Positionswerte zu einem Summenwert aufaddiert werden und der Unterschied zwischen dem Summenwert und dem Produkt aus dem Referenzwert und der Anzahl der aufaddierten Positionswerte als Kontrollwert ermittelt wird,
g) und dass der Kontrollwert mit einem vorgegebenen Sollwertbereich verglichen und beim Auftreten einer Abweichung zwischen dem Kontrollwert und dem Sollwertbereich ein Fehlerzustand erkannt wird.

Auch bei dieser Lösung bewirken Fehler, die bei den einzelnen Zyklen immer das gleiche Vorzeichen aufweisen, eine betragsmäßige Zunahme des Kontrollwerts. Somit können auch kleine Fehler sicher aufgedeckt werden. Der Summenwert und der Kontrollwert werden vorzugsweise in einem nicht flüchtigen Datenspeicher abgelegt.

Bei einer vorteilhaften Ausführungsform der Erfindung wird das inkrementale Lagemesssignal mit einem hinterlegten Signal verglichen, und beim Auftreten einer Abweichung zwischen dem Lagemesssignal und dem hinterlegten Signal wird ein Fehlerzustand erkannt. Dabei kann beispielsweise bei einem inkrementalen Lagemesssignal, das bei fehlerfreier Signalgewinnung eine vorbestimmte Abfolge von logischen Signalpegeln (z.B. 0 und 1) durchläuft, diese Abfolge mit einem hinterlegten Muster verglichen werden. Die Positionierung des beweglichen Elements wird also auf zwei unterschiedliche Arten überwacht, wodurch Fehler bei der Positionierung noch sicherer aufgedeckt werden können.

Vorteilhaft ist, wenn während und/oder nach dem Erkennen des Fehlerzustands ein Ansteuern des Antriebsmotors gesperrt wird. Dabei wird davon ausgegangen, dass sich die mit der Antriebseinrichtung zu verstellende Baugruppe, wie z.B. ein automatisiertes Getriebe und/oder eine Kupplung, vor dem Detektieren des Fehlerzustands in einem sicheren Zustand befindet und dass dieser beibehalten werden soll.

Bei einer anderen zweckmäßigen Ausführungsform der Erfindung ist vorgesehen, dass ein Signal, das ein Maß für die Zuverlässigkeit des absoluten Positionssignals ist, bereitgestellt wird, und dass dieses Signal während oder nach dem Erkennen des Fehlerzustands auf einen Wert gesetzt wird, dem eine kleinere Zuverlässigkeit zugeordnet ist. Das Signal, das ein Maß für das Systemvertrauen darstellt, kann dann zyklisch überwacht und/oder bei mindestens einem vorbestimmten Betriebszustand des Kraftfahrzeugs abgefragt werden, um in Abhängigkeit von dem Betriebszustand eine vorgegebene Aktion auszulösen, wie z.B. ein Neustart eines Mikrocomputers, der für die Gewinnung des absoluten Positionssignals benötigt wird.

Nachfolgend ist ein Ausführungsbeispiel der Erfindung anhand der Zeichnung näher erläutert.

### Es zeigen:

- Fig. 1: eine schematische Darstellung eines Kraftfahrzeugs,
- Fig. 2: eine graphische Darstellung der mechanischen Position (durchgezogene Linie) eines verstellbaren Elements und eines absoluten Positionssignals (strichlinierte Linie), wobei auf der Abszisse die Zeit und auf der Ordinate die Position aufgetragen sind,
- Fig. 3: eine graphische Darstellung eines aus dem in Fig. 2 gezeigten Positionssignal abgeleiteten Kontrollwertsignals,
- Fig. 4: eine Darstellung ähnlich Fig. 2, wobei jedoch bei der Erfassung des Positionssignals ein systematischer Fehler vorliegt,
- Fig. 5: eine graphische Darstellung eines aus dem in Fig. 4 gezeigten Positionssignal abgeleiteten Kontrollwertsignals, und
- Fig. 6: ein Flussdiagramm, welches die bei der Ermittlung des Kontrollwertsignals zu durchlaufenden Schritte erläutert.

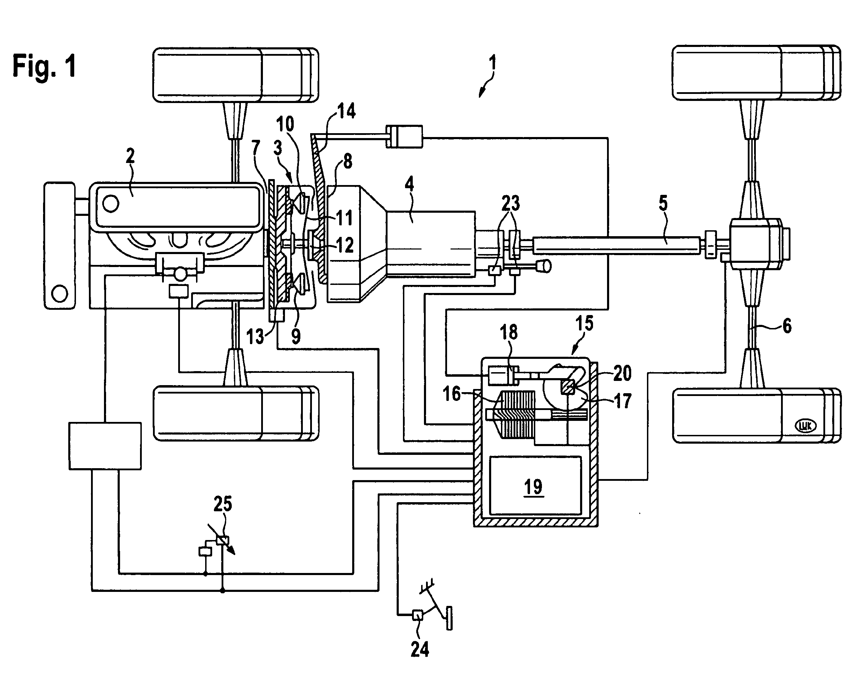

Ein in Fig. 1 im Ganzen mit 1 bezeichnetes Kraftfahrzeug weist einen Antriebsstrang mit einer Antriebseinheit 2, wie z.B. einem Motor oder einer Brennkraftmaschine auf. Weiterhin sind im Antriebsstrang eine Kupplung 3 und ein Getriebe 4 angeordnet. Die Kupplung 3 ist im Kraftfluss zwischen Antriebseinheit 2 und Getriebe 4 angeordnet, wobei ein Antriebsmoment der Antriebseinheit 2 über die Kupplung 3 an das Getriebe 4 und von dem Getriebe 4 abtriebsseitig an eine Abtriebswelle 5 und an eine nachgeordnete Achse 6 sowie an die Räder übertragen wird.

Die Kupplung 3 weist eine Antriebsseite 7 und eine Abtriebsseite 8 auf, wobei ein Drehmoment von der Antriebsseite 7 auf die Abtriebsseite 8 übertragen wird, indem z.B. eine Kupplungsscheibe 9 mittels einer Druckplatte 10, einer Tellerfeder 11 und einem Ausrücklager 12 sowie ein Schwungrad 13 kraftbeaufschlagt werden. Zu dieser Beaufschlagung wird der Ausrückhebel 14 mittels eines Aktors 15 betätigt.

Der Aktor 15 weist einen Antriebsmotor 16, vorzugsweise einen elektronisch kommutierten Elektromotor auf, der über ein Übersetzungsgetriebe 17 mit einem beweglichen Element 18, nämlich einem Geberzylinder einer hydraulischen Kupplungsbetätigungseinrichtung verbunden ist. Diese steht mit dem Ausrückhebel 14 in Antriebsverbindung. Die Ansteuerung des Antriebsmotors 16 erfolgt mittels einer Steuereinrichtung 19, die eine Steuerelektronik aufweist, die über eine Endstufe mit einer Wicklung des Antriebsmotors 16 verbunden ist.

Die Bewegung des beweglichen Elements 18 wird mittels eines Kupplungswegsensors 20 inkremental erfasst. Dazu können beispielsweise am Stator des Antriebsmotors 16 mehrere Hallsensoren in Umfangsrichtung zueinander versetzt angeordnet sein, die mit am Rotor des Antriebsmotors 16 vorgesehenen permanentmagnetischen Polen zusammenwirken. Bei jedem Vorbeilaufen eines Magnetpols wird von dem betreffenden Hallsensor ein elektrischer Impuls erzeugt.

Über die Stellung des beweglichen Elements 18 kann die Kraftbeaufschlagung der Druckplatte 10 bzw. der Reibbeläge gezielt entsprechend einem bereitgestellten Sollwertsignal eingestellt werden. Dabei kann die Druckplatte 10 zwischen zwei Endpositionen beliebig positioniert und in der entsprechenden Lage fixiert werden. Die eine Endposition entspricht einer völlig eingerückten Kupplungsposition und die andere Endposition einer völlig ausgerückten Kupplungsposition.

Zur Einstellung eines mit der Kupplung 3 übertragbaren Drehmomentes kann eine Position der Druckplatte 10 angesteuert werden, die in einem Zwischenbereich zwischen den beiden Endpositionen liegt. Das bewegliche Element 18 wird dazu mit Hilfe des Aktors 15 in einer entsprechenden Lage positioniert.

Damit die Kupplung 3 in die für das zu übertragende Drehmomente erforderliche Position gebracht werden kann, wird ein die Lage des beweglichen Elements anzeigendes absolutes Positionssignal erzeugt. Dazu wird das bewegliche Element 18 in einem ersten Schritt mit Hilfe des Antriebsmotors 16 in eine vorbestimmte Referenzlage gebracht. Dies kann beispielsweise dadurch erreicht werden, dass das bewegliche Element 18 gegen einen ortsfesten mechanischen Anschlag bekannter Position positioniert wird und das Erreichen des Anschlags detektiert wird.

Zum Detektieren des Anschlags kann das Messsignal des Kupplungswegsensors 20 ausgewertet werden. Wenn während des Ansteuerns des Antriebsmotors 16 in Richtung auf den Anschlag das Messsignal konstant bleibt, wird der Anschlag detektiert. Selbstverständlich ist es aber auch möglich, das Positionieren des beweglichen Elements 18 gegen den Anschlag unabhängig von dem Messsignal des Kupplungswegsensors 20 mit Hilfe eines separaten Referenzlagensensors, wie z.B. einem Endschalter, zu detektieren.

Sobald das Erreichen der Referenzlage detektiert wurde, wird ein bereitgestelltes absolutes Positionssignal auf einen der Referenzlage zugeordneten Referenzwert gesetzt, beispielsweise auf den Wert 0.

Nun wird die Lage des beweglichen Elements 18 mit Hilfe des Antriebsmotors verändert, beispielsweise um beim Auftreten einer Veränderung in dem Sollwertsignal für die Kraftbeaufschlagung der Druckplatte 10 die Position der Druckplatte 10 entsprechend zu verstellen. Das inkrementale Lagemesssignal wird überwacht und beim Auftreten einer Änderung des inkrementalen Lagemesssignals wird das absolute Positionssignal entsprechend nachgeführt.

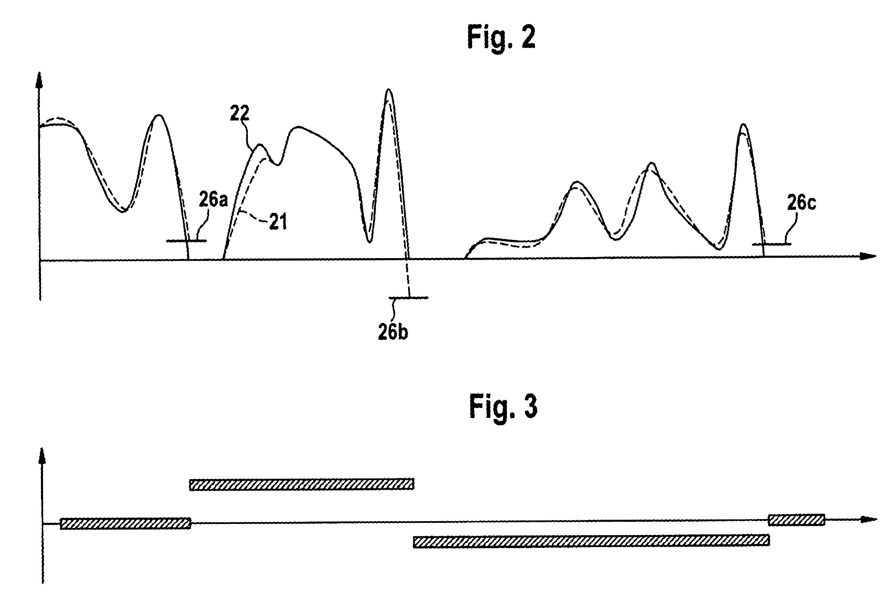

In Fig. 2 ist ein möglicher Verlauf des gemessenen absoluten Positionssignals durch die strichlinierte Linie 21 beispielhaft dargestellt. Zusätzlich ist die tatsächliche mechanische Position des beweglichen Elements 18 durch eine durchgezogene Linie 22 markiert. Deutlich ist erkennbar, dass die Linie 21 des Positionssignals nur geringfügig von der Linie 22 für die mechanische Position abweicht.

Der Betriebszustand des Kraftfahrzeugs 1 wird mit Hilfe von Sensoren 23, 24 ,25 überwacht. In Fig. 1 sind beispielhaft zwei Sensoren 23 zur Bestimmung der Position eines Schalthebels und ein Sensor 24 zur Bestimmung der Position eines Bremspedals und ein Leerlaufschalter 25 dargestellt.

Wenn der Betriebszustand des Kraftfahrzeugs 1 dies erlaubt, wird das bewegliche Element 18 mit Hilfe des Antriebsmotors 16 erneut in der Referenzlage positioniert. Dies kann beispielsweise geschehen, wenn in dem Getriebe 4 kein Gang eingelegt und dadurch der Kraftfluss zwischen der Antriebseinheit 2 und der Achse 6 unterbrochen ist.

Sobald die Referenzlage detektiert wird, wird ein erster Positionswert 26a für das absolute Positionssignal bestimmt. Wie in Fig. 2 erkennbar ist, kann beispielsweise aufgrund von mechanischen Toleranzen und/oder Quantisierungsrauschen der erste Positionswert 26a von der Referenzlage abweichen.

Nun wird der Unterschied zwischen dem ersten Positionswert 26a und dem Referenzwert gebildet und als Kontrollwert in einem in der Zeichnung nicht näher dargestellten Datenspeicher abgelegt (Fig. 3). Wenn der Referenzwert gleich Null ist, kann der Positionswert 26a direkt in dem Datenspeicher abgelegt werden. Außerdem wird das absolute Positionssignal auf den der Referenzlage zugeordneten Referenzwert gesetzt, also z.B. auf den Wert 0.

Nun wird die Lage des beweglichen Elements 18 mit Hilfe der Antriebsmotors 16 erneut verändert, um die Druckplatte 10 entsprechend dem Sollwertsignal für die Kraftbeaufschlagung zu positionieren.

Wenn der Betriebszustand des Kraftfahrzeugs 1 dies erlaubt, wird das bewegliche Element 18 mit Hilfe des Antriebsmotors 16 ein weiteres Mal in der Referenzlage positioniert, um einen zweiten Positionswert 26b für das absolute Positionssignal zu bestimmen. Es wird der Unterschied zwischen dem zweiten Positionswert 26b und dem Referenzwert ermittelt und zu dem in dem Datenspeicher abgelegten Kontrollwert hinzuaddiert. Das Ergebnis dieser Addition wird als neuer Kontrollwert (Fig. 3) in dem Datenspeicher abgelegt. Das absolute Positionssignal wird wiederum auf den der Referenzlage zugeordneten Referenzwert gesetzt (Fig. 2).

Bei Bedarf kann die Lage des beweglichen Elements 18 mit Hilfe der Antriebsmotors 16 erneut verändert und das beweglichen Element danach wieder in der Referenzlage positioniert werden, um mindestens einen dritten Positionswert 26c zu ermitteln und in entsprechender Weise den Kontrollwert fortzuschreiben. In Fig. 3 ist erkennbar, dass die einzelnen Differenzen zwischen den Positionswerten 26a, 26b, 26c einerseits und dem Referenzwert andererseits unterschiedliche Vorzeichen aufweisen und der aufaddierte Kontrollwert daher nur kleine Werte annimmt.

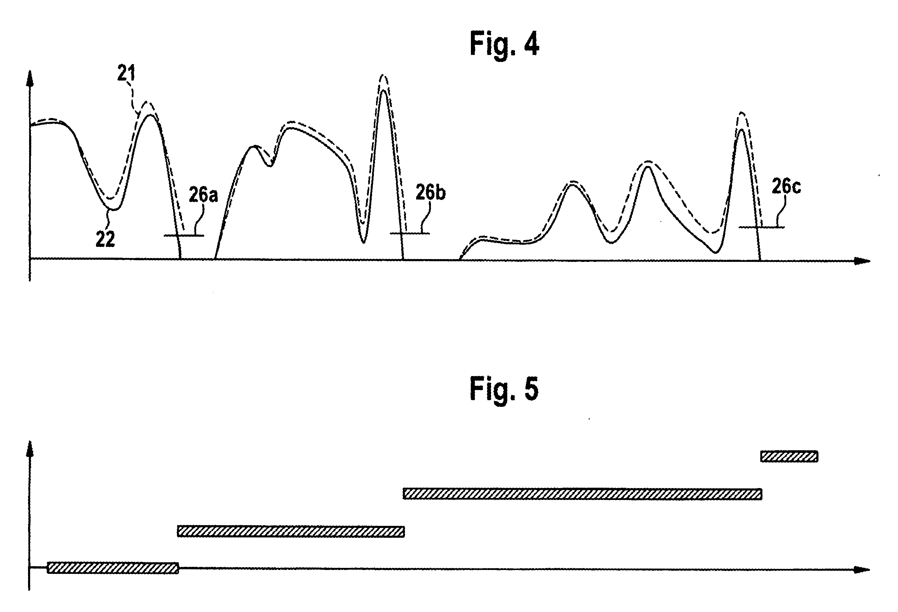

In Fig. 4 und 5 sind die mechanische Position des beweglichen Elements 18, das absolutes Positionssignal und das Kontrollwertsignal für eine Antriebseinrichtung dargestellt, bei der beim Messen des absoluten Positionssignals ein systematischer Fehler auftritt, der dazu führt, dass die einzelnen Differenzen zwischen den Positionswerten 26a, 26b, 26c einerseits und dem Referenzwert andererseits immer dasselbe Vorzeichen aufweisen. Deutlich ist erkennbar, dass der Kontrollwert bei jedem Positionsabgleich betragsmäßig zunimmt.

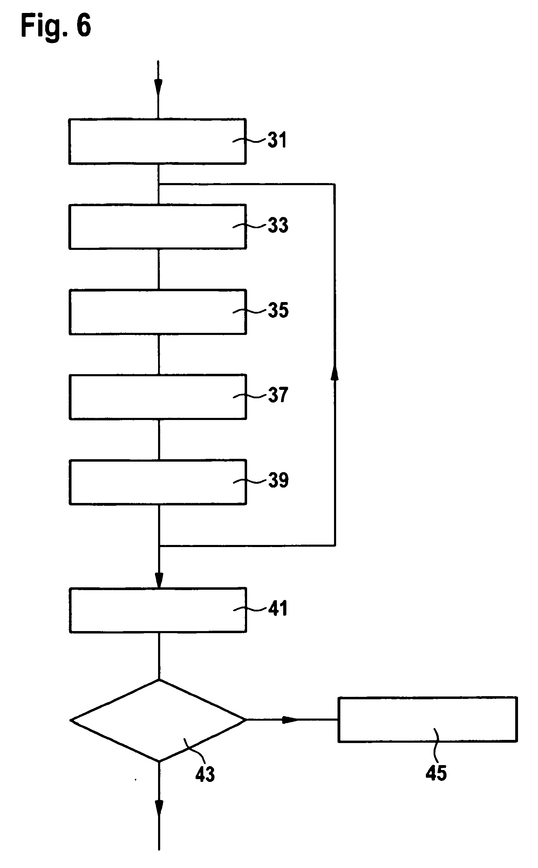

Um diesen Fehler aufzudecken, wird der Kontrollwert bzw. das Kontrollwertsignal mit einem vorgegebenen Sollwertbereich verglichen. In Fig. 6 ist im Verfahrensschnitt 43 erkennbar, dass beim Auftreten einer Abweichung zwischen dem Kontrollwert bzw. Kontrollwertsignal und dem Sollwertbereich ein Fehlerzustand erkannt wird, bei dem ein Signal, das ein Maß für die Zuverlässigkeit des absoluten Positionssignals ist, auf einen Wert gesetzt wird, dem eine kleinere Zuverlässigkeit zugeordnet ist. Sobald der Betriebszustand des Kraftfahrzeugs 1 dies erlaubt, wird eine Referenzfahrt durchgeführt, bei der das absolute Positionssignal auf die Referenzlage abgeglichen wird und/oder ein Eintrag im Fehlerspeicher durchgeführt.

Die Erfindung betrifft also ein Verfahren zum Betreiben einer Antriebseinrichtung, das folgende Schritte umfasst:
a) Im Verfahrensschnitt 31 wird ein bewegliches Element in eine vorbestimmte Referenzlage gebracht und ein absolutes Positionssignal wird auf einen Referenzwert gesetzt.
b) Im Verfahrensschnitt 33 wird die Lage des beweglichen Elements verändert und es wird ein von der Lageänderung abhängiges inkrementales Lagemesssignal erzeugt.
c) Im Verfahrensschnitt 35 wird das Lagemesssignal überwacht und das absolute Positionssignal wird beim Auftreten einer Änderung nachgeführt.
d) Im Verfahrensschnitt 37 wird das bewegliche Element erneut in der Referenzlage positioniert und es wird der Positionswert, den das absolute Positionssignal in der Referenzlage aufweist, ermittelt.
e) Im Verfahrensschnitt 39 wird aus dem Positionswert und dem Referenzwert ein Differenzwert ermittelt und in einem Datenspeicher abgelegt.
f) Die Schritte b) bis e) bzw. die Verfahrensschritte 33 bis 39 werden mindestens einmal erneut durchlaufen.
g) Im Verfahrensschnitt 41 werden mindestens zwei der so erhaltenen Differenzwerte zu einem Kontrollwert aufaddiert.
h) Im Verfahrensschnitt 43 wird der Kontrollwert mit einem vorgegebenen Sollwertbereich verglichen und beim Auftreten einer Abweichung zwischen dem Kontrollwert und dem Sollwertbereich wird ein Fehlerzustand 45 erkannt.

Eine weitere Ausführungsform ist mit der vorhergehenden in den Verfahrensschritten 31 bis 37 identisch. Im Verfahrensschritt 39 wird aus dem Positionswert und dem Referenzwert ebenfalls ein Differenzwert ermittelt. Die im Schritt f) beschriebene Schleife entfällt. Im Verfahrensschritt 41 wird der aktuelle Kontrollwert durch Hinzuaddieren des Differenzwertes zum vorhergehenden Kontrollwert gebildet. Im Verfahrensschritt 43 wird der Kontrollwert mit einem vorgegebenen Sollwertbereich verglichen und beim Auftreten einer Abweichung zwischen dem Kontrollwert und dem Sollwertbereich wird ein Fehlerzustand erkannt. Es versteht sich, dass bei diesem Vergleich der Kontrollwert mit der Anzahl der aufaddierten Differenzwerte gewichtet werden muss. Anschließend kehrt das Verfahren zum Verfahrensschritt 33 zurück.

### Bezugszeichenliste

- 1: Kraftfahrzeug
- 2: Antriebseinheit
- 3: Kupplung
- 4: Getriebe
- 5: Abtriebswelle
- 6: Achse
- 7: Antriebsseite
- 8: Abtriebsseite
- 9: Kupplungsscheibe
- 10: Druckplatte
- 11: Tellerfeder
- 12: Ausrücklager
- 13: Schwungrad
- 14: Ausrückhebel
- 15: Aktor
- 16: Antriebsmotor
- 17: Übersetzungsgetriebe
- 18: bewegliches Element
- 19: Steuereinrichtung
- 20: Kupplungswegsensor
- 21: Linie
- 22: Linie
- 23: Sensor zur Bestimmung der Schalthebelposition
- 24: Sensor zur Bestimmung der Position eines Bremspedals
- 25: Leerlaufschalter
- 26a: erster Positionswert
- 26b: zweiter Positionswert
- 26c: dritter Positionswert
- 31: Verfahrensschritt
- 33: Verfahrensschritt
- 35: Verfahrensschritt
- 37: Verfahrensschritt
- 39: Verfahrensschritt
- 41: Verfahrensschritt
- 43: Verfahrensschritt
- 45: Verfahrensschritt

## Patentansprüche

1. Verfahren zum Betreiben einer Antriebseinrichtung zum Verstellen eines automatisierten Getriebes und/oder einer Kupplung in einem Kraftfahrzeug (1), wobei das Kraftfahrzeug eine Steuereinrichtung (19) aufweist, mittels derer zumindest eine Steuerung der Antriebseinrichtung und eine Erfassung von Messdaten eines Getriebewegsensors und/oder eines Kupplungswegsensors (20) zur Ermittlung der Stellung des Getriebes und/oder der Kupplung erfolgt, wobei die Antriebseinrichtung einen Antriebsmotor (16) aufweist, der mit einem zu positionierenden beweglichen Element (18) in Antriebsverbindung steht, wobei
a) das bewegliche Element (18) mit Hilfe des Antriebsmotors (16) in eine vorbestimmte Referenzlage gebracht und ein absolutes Positionssignal auf einen der Referenzlage zugeordneten Referenzwert gesetzt wird, **dadurch gekennzeichnet, dass**
b) die Lage des beweglichen Elements (18) mit Hilfe des Antriebsmotors (16) verändert und ein von der Lageänderung abhängiges inkrementales Lagemesssignal für das bewegliche Element (18) erzeugt wird,
c) das inkrementale Lagemesssignal überwacht und das absolute Positionssignal beim Auftreten einer Änderung des inkrementalen Lagemesssignals nachgeführt wird,
d) das bewegliche Element (18) mit Hilfe des Antriebsmotors (16) erneut in der Referenzlage positioniert und der Positionswert, den das absolute Positionssignal in der Referenzlage aufweist, ermittelt wird,
e) aus dem Positionswert und dem Referenzwert ein Differenzwert ermittelt und in einem Datenspeicher abgelegt wird,
f) die Schritte b) bis e) mindestens einmal erneut durchlaufen werden,
g) mindestens zwei der so erhaltenen Differenzwerte zu einem Kontrollwert aufaddiert werden,
h) und der Kontrollwert mit einem vorgegebenen Sollwertbereich verglichen und beim Auftreten einer Abweichung zwischen dem Kontrollwert und dem Sollwertbereich ein Fehlerzustand erkannt wird.

2. Verfahren zum Betreiben einer Antriebseinrichtung zum Verstellen eines automatisierten Getriebes und/oder einer Kupplung in einem Kraftfahrzeug (1), wobei das Kraftfahrzeug eine Steuereinrichtung (19) aufweist, mittels derer zumindest eine Steuerung der Antriebseinrichtung und eine Erfassung von Messdaten eines Getriebewegsensors und/oder eines Kupplungswegsensors (20) zur Ermittlung der Stellung des Getriebes und/oder der Kupplung erfolgt, wobei die Antriebseinrichtung einen Antriebsmotor (16) aufweist, der mit einem zu positionierenden beweglichen Element (18) in Antriebsverbindung steht, wobei
a) das bewegliche Element (18) mit Hilfe des Antriebsmotors (16) in eine vorbestimmte Referenzlage gebracht und ein absolutes Positionssignal auf einen der Referenzlage zugeordneten Referenzwert gesetzt wird, **dadurch gekennzeichnet, dass**
b) die Lage des beweglichen Elements (18) mit Hilfe des Antriebsmotors (16) verändert und ein von der Lageänderung abhängiges inkrementales Lagemesssignal für das bewegliche Element erzeugt wird,
c) das inkrementale Lagemesssignal überwacht und das absolute Positionssignal beim Auftreten einer Änderung des inkrementalen Lagemesssignals nachgeführt wird,
d) das bewegliche Element (18) mit Hilfe des Antriebsmotors (16) erneut in der Referenzlage positioniert und der Positionswert, den das absolute Positionssignal in der Referenzlage aufweist, ermittelt und in einem Datenspeicher abgelegt wird,
e) die Schritte b) bis d) mindestens einmal erneut durchlaufen werden,
f) die so erhaltenen Positionswerte zu einem Summenwert aufaddiert werden und der Unterschied zwischen dem Summenwert und dem Produkt aus dem Referenzwert und der Anzahl der aufaddierten Positionswerte als Kontrollwert ermittelt wird,
g) und der Kontrollwert mit einem vorgegebenen Sollwertbereich verglichen und beim Auftreten einer Abweichung zwischen dem Kontrollwert und dem Sollwertbereich ein Fehlerzustand erkannt wird.

3. Verfahren nach Anspruch 1 oder 2, **dadurch gekennzeichnet, dass** das inkrementale Lagemesssignal mit einem hinterlegten Signal verglichen wird, und beim Auftreten einer Abweichung zwischen dem Lagemesssignal und dem hinterlegten Signal ein Fehlerzustand erkannt wird.

4. Verfahren nach einem der Ansprüche 1 bis 3, **dadurch gekennzeichnet, dass** während und/oder nach dem Erkennen des Fehlerzustands ein Ansteuern des Antriebsmotors (16) gesperrt wird.

5. Verfahren nach einem der Ansprüche 1 bis 4, **dadurch gekennzeichnet, dass** ein Signal, das ein Maß für die Zuverlässigkeit des absoluten Positionssignals ist, bereitgestellt wird, und dass dieses Signal während oder nach dem Erkennen des Fehlerzustands auf einen Wert gesetzt wird, dem eine kleinere Zuverlässigkeit zugeordnet ist.

6. Vorrichtung, die zum Betreiben einer Antriebseinrichtung zum Verstellen eines automatisierten Getriebes und/oder einer Kupplung in einem Kraftfahrzeug (1) eingerichtet ist, wobei das Kraftfahrzeug eine Steuereinrichtung (19) aufweist, mittels derer zumindest eine Steuerung der Antriebseinrichtung und eine Erfassung von Messdaten eines Getriebewegsensors und/oder eines Kupplungswegsensors (20) zur Ermittlung der Stellung des Getriebes und/oder der Kupplung erfolgt, wobei die Antriebseinrichtung eine Antriebsmotor (16) aufweist, der mit einem zur positionierenden beweglichen Element (18) in Antriebsverbindung steht, **dadurch gekennzeichnet, dass** die Vorrichtung dazu eingerichtet ist, ein Verfahren gemäß Anspruch 1 oder 2 auszuführen.

## Claims

1. Method for operating a drive device for adjusting an automatic transmission and/or a clutch in a motor vehicle (1), wherein the motor vehicle has a control device (19) by means of which at least the drive device can be controlled and the measurement data of a transmission travel sensor and/or of a clutch travel sensor (20) can be acquired in order to determine the position of the transmission and/or of the clutch, wherein the drive device has a drive motor (16) which has a drive connection to a movable element (18) which is to be positioned, wherein
a) the movable element (18) is moved into a predetermined reference position using the drive motor (16), and an absolute position signal is set to a reference value which is assigned to the reference position, **characterized in that**
b) the position of the movable element (18) is changed by means of the drive motor (16), and an incremental position-measuring signal, which is dependent on the change in position, is generated for the movable element (18),
c) the incremental position-measuring signal is monitored and the absolute position signal is correspondingly adjusted when a change occurs in the incremental position-measuring signal,
d) the movable element (18) is positioned again in the reference position by means of the drive motor (16) and the position value which the absolute position signal has in the reference position is determined,
e) a difference value is determined from the position value and the reference value and is stored in a data memory,
f) the steps b) to e) are run through again at least once,
g) at least two of the difference values which are obtained in this way are added to form a check value,
h) and the check value is compared with a predefined setpoint value range, and when a deviation occurs between the check value and the setpoint value range a fault state is detected.

2. Method for operating a drive device for adjusting an automatic transmission and/or a clutch in a motor vehicle (1), wherein the motor vehicle has a control device (19) by means of which at least the drive device can be controlled and the measurement data of a transmission travel sensor and/or of a clutch travel sensor (20) can be acquired in order to determine the position of the transmission and/or of the clutch, wherein the drive device has a drive motor (16) which has a drive connection to a movable element (18) which is to be positioned, wherein
a) the movable element (18) is moved into a predetermined reference position using the drive motor (16), and an absolute position signal is set to a reference value which is assigned to the reference position, **characterized in that**
b) the position of the movable element (18) is changed by means of the drive motor (16), and an incremental position-measuring signal, which is dependent on the change in position, is generated for the movable element,
c) the incremental position-measuring signal is monitored and the absolute position signal is correspondingly adjusted when a change occurs in the incremental position-measuring signal,
d) the movable element (18) is positioned again in the reference position by means of the drive motor (16) and the position value which the absolute position signal has in the reference position is determined and is stored in a data memory,
e) the steps b) to d) are run through again at least once,
f) the position values which are obtained in this way are added to form a sum value, and the difference between the sum value and the product of the reference value and the number of added position values is determined as a check value,
g) and the check value is compared with a predefined setpoint value range, and when a deviation occurs between the check value and the setpoint value range a fault state is detected.

3. Method according to Claim 1 or 2, **characterized in that** the incremental position-measuring signal is compared with a stored signal, and when a deviation occurs between the position-measuring signal and the stored signal a fault state is detected.

4. Method according to one of Claims 1 to 3, **characterized in that** actuation of the drive motor (16) is blocked during and/or after the detection of the fault state.

5. Method according to one of Claims 1 to 4, **characterized in that** a signal which is a measure of the reliability of the absolute position signal is made available, and **in that** during or after the detection of the fault state this signal is set to a value to which a relatively low degree of reliability is assigned.

6. Apparatus which is designed for operating a drive device for adjusting an automatic transmission and/or a clutch in a motor vehicle (1), wherein the motor vehicle has a control device (19) by means of which at least the drive device can be controlled and measurement data of a transmission travel sensor and/or of a clutch travel sensor (20) can be acquired in order to determine the position of the transmission and/or the clutch, wherein the drive device has a drive motor (16) which has a drive connection to a movable element (18) to be positioned, **characterized in that** the apparatus is designed to carry out a method according to Claim 1 or 2.

## Revendications

1. Procédé de conduite d'un dispositif d'entraînement qui actionne une transmission automatique et/ou un embrayage d'un véhicule automobile (1),
le véhicule automobile présentant un dispositif de commande (19) qui permet au moins une commande du dispositif d'entraînement et une détection de données de mesure d'une sonde de déplacement de la transmission et/ou d'une sonde (20) de déplacement de l'embrayage en vue de déterminer la position de la transmission et/ou de l'embrayage,
le dispositif d'entraînement présentant un moteur d'entraînement (16) relié à entraînement à un élément mobile (18) à positionner, et dans lequel
a) l'élément mobile (18) est amené dans une position de référence prédéterminée à l'aide du moteur d'entraînement (16) et un signal absolu de position est réglé à une valeur de référence associée à la position de référence,
**caractérisé en ce que**
b) la position de l'élément mobile (18) est modifiée à l'aide du moteur d'entraînement (16) et un signal incrémentiel de mesure de position qui dépend de la modification de position est formé pour l'élément mobile (18),
c) le signal incrémentiel de mesure de position est surveillé et est ramené au signal absolu de position lorsque une modification du signal incrémentiel de mesure de position survient,
d) le moteur d'entraînement (16) ramène de nouveau l'élément mobile (18) dans la position de référence et la valeur de position qui présente le signal absolu de position dans la position de référence est déterminée,
e) une valeur de différence est déterminée à partir de la valeur de position et de la valeur de référence et est conservée dans une mémoire de données,
f) les étapes b) à e) sont traversées de nouveau au moins une fois,
g) au moins deux des valeurs de différence ainsi obtenues sont additionnées pour fournir une valeur de contrôle et
h) la valeur de contrôle est comparée à une plage prédéterminée de valeurs de consigne et un état de défaut est détecté au cas où survient un écart entre la valeur de contrôle et la plage de valeurs de consigne.

2. Procédé de conduite d'un dispositif d'entraînement qui actionne une transmission automatique et/ou un embrayage d'un véhicule automobile (1),
le véhicule automobile présentant un dispositif de commande (19) qui permet au moins une commande du dispositif d'entraînement et une détection de données de mesure d'une sonde de déplacement de la transmission et/ou d'une sonde (20) de déplacement de l'embrayage en vue de déterminer la position de la transmission et/ou de l'embrayage,
le dispositif d'entraînement présentant un moteur d'entraînement (16) relié à entraînement à un élément mobile (18) à positionner, et dans lequel
a) l'élément mobile (18) est amené dans une position de référence prédéterminée à l'aide du moteur d'entraînement (16) et un signal absolu de position est réglé à une valeur de référence associée à la position de référence,
**caractérisé en ce que**
b) la position de l'élément mobile (18) est modifiée à l'aide du moteur d'entraînement (16) et un signal incrémentiel de mesure de position qui dépend de la modification de position est formé pour l'élément mobile,
c) le signal incrémentiel de mesure de position est surveillé et est ramené au signal absolu de position lorsque une modification du signal incrémentiel de mesure de position survient,
d) le moteur d'entraînement (16) ramène de nouveau l'élément mobile (18) dans la position de référence et la valeur de position qui présente le signal absolu de position dans la position de référence est déterminée et est conservée dans une mémoire de données,
e) les étapes b) à d) sont traversées de nouveau au moins une fois,
f) les valeurs de position ainsi obtenues sont additionnées pour fournir une valeur de somme et la différence entre la valeur de somme et le produit de la valeur de référence et du nombre des valeurs de position additionnées est déterminée en tant que valeur de contrôle et
g) la valeur de contrôle est comparée à une plage prédéterminée de valeurs de consigne et un état de défaut est détecté au cas où survient un écart entre la valeur de contrôle et la plage de valeurs de consigne.

3. Procédé selon les revendications 1 ou 2, **caractérisé en ce que** le signal incrémentiel de mesure de position est comparé à un signal d'arrière-plan et une situation de défaut est détectée au cas où un écart survient entre le signal de mesure de position et le signal d'arrière-plan.

4. Procédé selon l'une des revendications 1 à 3, **caractérisé en ce que** la commande du moteur d'entraînement (16) est bloquée pendant et/ou la détection d'une situation de défaut.

5. Procédé selon l'une des revendications 1 à 4, **caractérisé en ce qu'**un signal qui est une mesure de la fiabilité du signal absolu de position est produit et **en ce que** pendant ou après la détection d'une situation de défaut, ce signal est placé à une valeur à laquelle une fiabilité plus basse est associée.

6. Dispositif conçu pour conduire un dispositif d'entraînement qui actionne une transmission automatique et/ou un embrayage d'un véhicule automobile (1),
le véhicule automobile présentant un dispositif de commande (19) qui permet au moins une commande du dispositif d'entraînement et une détection de données de mesure d'une sonde de déplacement de la transmission et/ou d'une sonde (20) de déplacement de l'embrayage en vue de déterminer la position de la transmission et/ou de l'embrayage,
le dispositif d'entraînement présentant un moteur d'entraînement (16) relié à entraînement à un élément mobile (18) à positionner,
**caractérisé en ce que**
le dispositif est conçu pour exécuter un procédé selon les revendications 1 ou 2.
